# EUROPÄISCHE PATENTSCHRIFT

(11) **EP 1 457 729 B1**
(45) Veröffentlichungstag und Bekanntmachung des Hinweises auf die Patenterteilung: **10.01.2007**
(21) Anmeldenummer: 04290418.5
(22) Anmeldetag: 16.02.2004
(51) Int. Cl.: F16L 59/12, F16L 59/065, F16L 59/14

(54) **Abstandshalter für ein langgestrecktes Substrat**
Spacer for an elongate substrate
Ecarteur pour un substrat allongé

(30) Priorität: 13.03.2003 DE 10310960
(43) Veröffentlichungstag der Anmeldung: 15.09.2004
(73) Patentinhaber: Nexans, 75008 Paris (FR)
(72) Erfinder: Schippl, Klaus, Dipl.-Ing., 30659 Hannover (DE)
(74) Vertreter: Döring, Roger

(56) Entgegenhaltungen:
- EP-A- 0 866 259
- WO-A-01/50055
- GB-A- 652 331
- US-A- 4 496 073

## Beschreibung

Die Erfindung betrifft ein koaxiales Rohrsystem nach dem Oberbegriff des Anspruchs 1.

Die Erfindung geht von folgender Überlegung aus:

Eine optimale thermische Isolierung in der Kältetechnik wird durch eine Vielschicht-Folienisolierung im Hochvakuum erreicht (Superisolierung). Dabei wird der Gesamtwärmestrom durch Minimieren der Komponenten Q_{Gas}, Q_{FK} und Q_{Rad} auf den technisch bisher geringstmöglichen Wert gebracht.

Die Verlustwärmeströme Q_{Gas} werden durch Evakuieren des Isolationsraums reduziert.

Die Feststoff-Wärmebrücken z. B. durch Abstandshalter, die verantwortlich für Q_{FK} sind, werden konstruktiv durch Minimieren der Festkörperkontaktströme reduziert.

Die Strahlungsverluste Q_{Rad} werden durch Verspiegelung der Innenwände oder durch Einbau hochreflektierender Folien reduziert.

Q_{FK} spielt gerade bei flexiblen, vakuumisolierten Kryoleitungsrohren eine entscheidende Rolle. Damit das kalte Innenrohr an keiner Stelle im Rohrverlauf direkten Kontakt zu dem auf Raumtemperatur befindlichen Außenrohr hat, wurden bisher Abstandhalter in verschiedenen Konstruktionen eingesetzt. Diese müssen eine möglichst große Kraftkomponente übertragen können, aber in gleichem Maße die Eigenschaft einer geringen Wärmeleitfähigkeit haben. Die bekannten Abstandshalter haben den Nachteil, die beiden notwendigen Zielsetzungen nicht in gleich gutem Maße umzusetzen. Falls eine geringe Wärmeleitung erreicht wurde, war die mechanische Belastbarkeit gering, bei hoher mechanischer Belastbarkeit mußte eine sehr hohe Wärmeleitung in Kauf genommen werden.

Aus der DE-C2-2 136 176 ist ein aus zwei konzentrischen Rohren bestehendes Rohrsystem z. B. ein bei tiefen Temperaturen betriebenes elektrisches Kabel oder eine Rohrleitung zum Transport flüssiger oder gasförmiger erwärmter oder gekühlter Medien bekannt, dessen inneres Rohr in dem umgebenden äußeren Rohr durch materialarme Abstandshalter in Lage gehalten ist. Die Abstandshalter sitzen in Abständen auf dem Innenrohr auf und stützen sich an der inneren Oberfläche des Außenrohres ab. Der Abstandshalter besteht aus mehreren geschlitzten Ringen, deren Schlitzbreite dem Durchmesser des Innenrohres entspricht. An jedem Ring ist im Schlitzbereich ein Fadenelement befestigt. Die Ringe sind so miteinander verbunden, daß sie um eine gemeinsame Drehachse schwenkbar sind. Beim Aufstecken des Abstandshalters auf das Innenrohr legen sich die Fadenelemente teilweise um das Innenrohr herum. Das Außenrohr stützt sich auf dem äußeren Umfang des aus den Ringen bebildeten Abstandshalters ab. Diese Konstruktion ist sehr materialarm, benötigt jedoch relativ viel Platz im Isolierbereich. Da weiterhin die dauerhafte Befestigung der Fadenelemente an den Ringen schwierig ist und die Anbindung sich unter einer Zugbelastung lösen kann, ist dieser Abstandshalter für biegbare Rohrsysteme weniger geeignet, denn bei solchen biegbaren Rohrsysteme können beim Biegen Zug- bzw. Druckbelastungen von mehr als 10000 N auftreten.

Aus der US-A-2 914 090 ist ein Abstandshalter für ein koaxiales Rohrsystem bekannt, welche in längsaxialem Abstand zueinander auf dem Innenrohr sitzen und diese im Abstand zum äußeren Rohr halten. Jeder Abstandshalter besteht aus einem das Innenrohr umhüllenden inneren metallischen Rohrstück sowie einem an der Innenwand des Außenrohres anliegenden ebenfalls aus Metall bestehenden äußeren Rohrstück. Zwischen dem inneren und dem äußeren Rohrstück sind gleichmäßig über dem Umfang verteilt drei speichenförmige Streben vorgesehen, die sowohl am inneren wie auch am äußeren Rohrstück angeschweißt sind. Das innere Rohrstück ist aus zwei koaxialen Rohren ausgebildet, zwischen denen sich eine thermische Isolierung z. B. aus Asbest befindet.

Dieser Abstandshalter weist zwar eine hohe mechanische Festigkeit auf, es mangelt ihm aber an den erforderlichen Isoliereigenschaften.

Die US-A-4 496 073, die als nächstliegender Stand der Technik angesehen wird, beschreibt eine Anordnung zum Speichern kryogener Medien nach Art eines Dewar Gefäßes. Die Anordnung besteht aus einem inneren rohrartigen Behälter, der konzentrisch zu einem äußeren rohrartigen Behälter angeordnet ist. Der innere Behälter dient zur Aufnahme kryogener Medien und ist an seinen beiden Enden verschlossen. Zwecks Vermeidung von zu hohen Wärmeverlusten ist zwischen dem inneren rohrartigen Behälter und dem äußeren rohrartigen Behälter ein Ringspalt vorgesehen. Der Ringspalt wird durch eine Abstandshalterung aufrechterhalten, welche aus zwei voneinander beabstandeten Ringen, welche auf dem inneren Behälter aufsitzen, einem Stützrohr, welches auf den Ringen aufliegt sowie zwei auf dem Stützrohr aufliegenden Ringen, welche die innere Oberfläche des äußeren Behälters tangiert, besteht. Das Stützrohr besteht aus einem mechanisch festen und thermisch isolierenden Material wie beispielsweise faserverstärktem Kunststoff.

Der Erfindung liegt die Aufgabe zugrunde, ein koaxiales Rohrsystem anzugeben, bei welchem der Abstandshalter materialarm ausgebildet ist und von daher gute Wärmeisoliereigenschaften aufweist sowie hohe mechanische Belastungen auszuhalten vermag. Insbesondere sollen die Wärmeverluste durch Wärmeleitung bei einem Rohrsystem großer Länge niedrig gehalten werden.

Diese Aufgabe wird durch die im Kennzeichen des Anspruchs 1 angegebenen Merkmale gelöst.

Weitere vorteilhafte Ausgestaltungen des koaxialen Rohrsystems sind in den Unteransprüchen erfaßt.

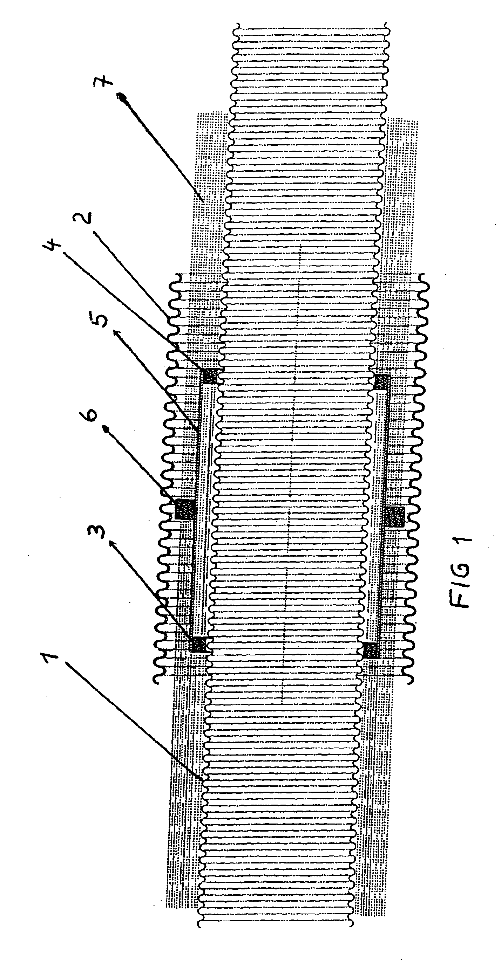

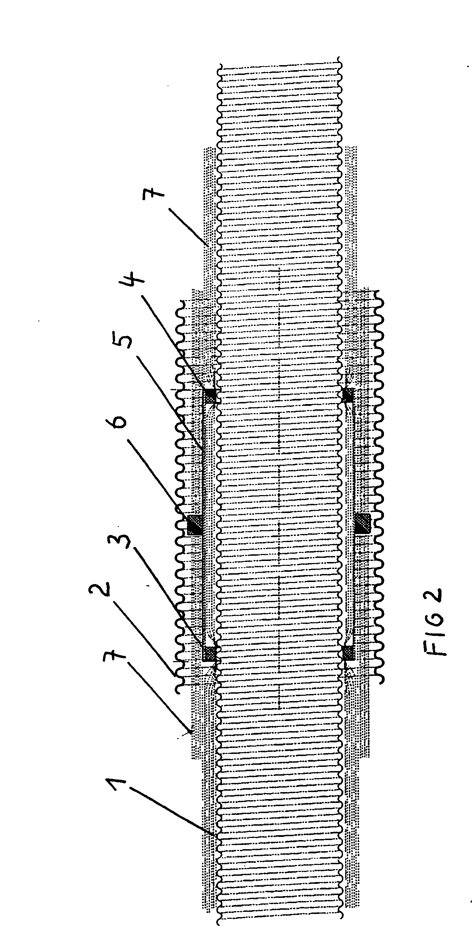

Die Erfindung ist anhand der in den Figuren 1 und 2 schematisch dargestellten Ausführungsbeispiele erläutert.

In der Figur 1 ist ein aus zwei konzentrisch zueinander angeordneten Leitungsrohren bestehendes Rohrsystem dargestellt, welches z. B. zum Transport kryogener Medien verwendet werden soll.

Das Rohrsystem besteht aus einem gewellten metallischen Innenrohr 1, vorzugsweise aus nichtrostendem Stahl sowie einem ebenfalls gewellten metallischen Außenrohr 2, welches vorzugsweise ebenfalls aus nichtrostendem Stahl besteht. Durch die Wellung des Innenrohres 1 sowie des Außenrohres 2 ist das Rohrsystem flexibel und kann auf Transporttrommeln aufgewickelt und damit zum Anwendungsort transportiert werden. Wenn die Rohre 1 und 2 durch Formen eines nahezu endlosen Metallbandes zu einem Rohr mit Längsschlitz, verschweißen des Längsschlitzes und anschließendes Wellen des Rohres hergestellt werden, können Rohre von nahezu endloser Länge hergestellt werden.

Zwischen dem Innenrohr 1 und dem Außenrohr 2 befinden sich in bestimmten längsaxialen Abständen Abstandshalter, welche aus zwei auf dem Innenrohr 1 sitzenden Ringen 3 und 4, einem Rohrstück 5 sowie einem zwischen dem Rohrstück 5 und dem Außenrohr 2 befindlichen Ring 6 besteht. Die Ringe 3 und 4 des Rohrstücks 5 sowie der Ring 6 sind aus faserverstärktem Kunststoff, z. B. glasfaserverstärkten Epoxidharz hergestellt.

Der Abstandshalter kann aus den Teilen 3, 4, 5 und 6 zusammengesetzt sein und als Ganzes auf das Innenrohr 1 aufgeschoben sein.

Alternativ hierzu kann der als Ganzes hergestellte Abstandshalter in zwei Teile getrennt sein, so daß er seitlich auf das Innenrohr aufgesteckt werden kann.

Zwischen Innenrohr 1 und Außenrohr 2 befindet sich eine sogenannte Superisolierung 7, die aus einer Vielzahl von Lagen aus metallisierten Kunststofffolien besteht.

Die Superisolierung 7 ist auch im Bereich des Abstandshalters vorgesehen. Sie kann bei einer Ausgestaltung des Abstandshalters aus zwei Teilen, die seitlich auf das Innenrohr 1 aufgesteckt werden, an der Innenwandung des Rohrstücks 5 befestigt sein.

Bei dem Ausführungsbeispiel nach Figur 2 ist die Superisolierung 7 zunächst über die gesamte Länge des Innenrohres 1 aufgewickelt. Anschließend werden die Abstandshalter auf die Superisolierung aufgesteckt, die dabei im Bereich der Ringe 3 und 4 komprimiert wird.

Diese Vorgehensweise bietet sich an, wenn große Längen des Rohrsystems gefertigt werden sollen.

Dabei wird zunächst das Innenrohr 1 gefertigt und auf eine Vorratstrommel aufgewickelt. Die Superisolierung 7 kann bei der Fertigung des Innenrohres 1 im selben Arbeitsgang aufgewickelt werden.

Im nächsten Arbeitsgang wird das isolierte Innenrohr 1 von der Vorratstrommel abgezogen und die Abstandshalter werden auf die Superisolierung aufgesteckt.

Ein Metallband wird von einer Vorratsspule abgezogen und in kontinuierlicher Arbeitsweise um das Innenrohr 1 herum zu einem Schlitzrohr geformt, längsnahtgeschweißt und gewellt. Auf das so gebildete Außenrohr 2 kann noch ein Kunststoffmantel aufextrudiert werden.

Am Verlegeort wird der Spalt zwischen dem Innen- und dem Außenrohr evakuiert.

## Patentansprüche

1. Koaxiales Rohrsystem zum Transport tiefgekühlter Medien, bestehend aus einem gewellten inneren Metallrohr (1), einem gewellten äußeren Metallrohr (2) sowie einem Abstandshalter zwischen dem inneren und dem äußeren Metallrohr, bei welchem der Ringraum zwischen dem inneren und dem äußeren Metallrohr evakuiert ist, wobei der Abstandshalter aus zwei in längsaxialem Abstand zueinander angeordneten, auf dem Innenrohr (1) sitzenden ersten Ringen (3,4), einem auf den Ringen (3,4) sich abstützenden Rohrstück (5) sowie einem auf dem Rohrstück (5) befindlichen zweiten Ring (6) besteht, die ersten Ringe (3,4), das Rohrstück (5) sowie der zweite Ring (6) aus faserverstärktem Kunststoff bestehen und die ersten Ringe (3,4), das Rohrstück (5) sowie der zweite Ring (6) als Halbschalen ausgebildet sind.

2. Koaxiales Rohrsystem nach Anspruch 1, **dadurch gekennzeichnet, daß** zwischen dem inneren Metallrohr (1) und den ersten Ringen (3,4) eine Superisolierung (7) vorgesehen ist.

3. Koaxiales Rohrsystem nach Anspruch 1 oder 2, **dadurch gekennzeichnet, daß** im Bereich zwischen den beiden ersten Ringen (3,4) eine Superisolierung (7) angeordnet ist.

4. Koaxiales Rohrsystem nach einem der Ansprüche 1 bis 3, **dadurch gekennzeichnet, daß** das Rohrstück (5) eine Wanddicke zwischen 0,5 und 2 mm aufweist.

5. Koaxiales Rohrsystem nach einem der Ansprüche 1 bis 4, **dadurch gekennzeichnet, daß** das Rohrstück (5) eine Länge aufweist, die dem 1-2fachen des Außendurchmessers des äußeren Metallrohres (2) entspricht.

6. Koaxiales Rohrsystem nach einem der Ansprüche 1 bis 5, **dadurch gekennzeichnet, daß** der Spalt zwischen dem Rohrstück (5) und dem äußeren Metallrohr (2) beiderseits des zweiten Ringes (6) mit Superisolierung (7) ausgefüllt ist.

7. Koaxiales Rohrsystem nach einem der Ansprüche 1 bis 6, **dadurch gekennzeichnet, daß** die Halbschalen der ersten Ringe (3,4), des Rohrstücks (5) sowie des zweiten Ringes (6) jeweils eine Einheit bilden.

## Claims

1. Coaxial pipe system for transporting deep-frozen media, consisting of a corrugated inner metal pipe (1), a corrugated metal pipe (2) and a spacer between the inner and the outer metal pipes, in the case of which the annular space between the inner and the outer metal pipes is evacuated, in which the spacer consists of two first rings (3, 4) which are arranged, seated on the inner pipe (1), at a longitudinal axial distance from one another, of a pipe length (5) supported on the rings (3, 4), and of a second ring (6) located on the pipe length (5), the first rings (3, 4), the pipe length (5) and a second ring (6) consisting of fibre reinforced plastic, and the first rings (3, 4), the pipe length (5) and the second ring (6) being designed as half shells.

2. Coaxial pipe system according to Claim 1, **characterized in that** a superinsulation (7) is provided between the inner metal pipe (1) and the first rings (3, 4).

3. Coaxial pipe system according to Claim 1 or 2, **characterized in that** a superinsulation (7) is arranged in the region between the two first rings (3, 4).

4. Coaxial pipe system according to one of Claims 1 to 3, **characterized in that** the pipe length (5) has a wall thickness of between 0.5 and 2 mm.

5. Coaxial pipe system according to one of Claims 1 to 4, **characterized in that** the pipe length (5) has a length which corresponds to 1×2 times the outside diameter of the outer metal pipe (2).

6. Coaxial pipe system according to one of Claims 1 to 5, **characterized in that** the gap between the pipe length (5) and the outer metal pipe (2) is filled up with superinsulation (7) on both sides of the second ring (6).

7. Coaxial pipe system according to one of Claims 1 to 6, **characterized in that** the half shells of the first rings (3, 4), of the pipe length (5) and of the second ring (6) in each case form a unit.

## Revendications

1. Système de tubes coaxiaux destinés au transport de fluides cryogéniques, constitué d'un tube métallique intérieur ondulé (1), d'un tube métallique extérieur ondulé (2) ainsi que d'un écarteur situé entre le tube métallique intérieur et le tube métallique extérieur, dans lequel l'espace annulaire entre le tube métallique intérieur et le tube métallique extérieur est mis sous vide, l'écarteur étant constitué de deux premiers anneaux (3, 4) disposés à intervalles réguliers le long de l'axe sur le tube intérieur (1), d'une pièce tubulaire (5) qui s'appuie sur les anneaux (3, 4) ainsi que d'un deuxième anneau (6) situé sur la pièce tubulaire (5), les premiers anneaux (3, 4), la pièce tubulaire (5) ainsi que le deuxième anneau (6) étant réalisés en matière synthétique renforcée de fibres, les premiers anneaux (3, 4), la pièce tubulaire (5) ainsi que le deuxième anneau (6) étant configurés comme demi-coquilles.

2. Système de tubes coaxiaux selon la revendication 1, **caractérisé en ce qu'**une superisolation (7) est prévue entre le tube métallique intérieur (1) et les premiers anneaux (3, 4).

3. Système de tubes coaxiaux selon la revendication 1 ou 2, **caractérisé en ce qu'**une superisolation (7) est disposée dans la partie située entre les deux premiers anneaux (3, 4).

4. Système de tubes coaxiaux selon l'une quelconque des revendications 1 à 3, **caractérisé en ce que** la pièce tubulaire (5) présente une paroi dont l'épaisseur est comprise entre 0,5 et 2 mm.

5. Système de tubes coaxiaux selon l'une quelconque des revendications 1 à 4, **caractérisé en ce que** la pièce tubulaire (5) a une longueur qui correspond à 1-2 fois le diamètre extérieur du tube métallique extérieur (2).

6. Système de tubes coaxiaux selon l'une quelconque des revendications 1 à 5, **caractérisé en ce que** l'interstice entre la pièce tubulaire (5) et le tube métallique extérieur (2) est rempli d'une superisolation (7) sur les deux côtés du deuxième anneau (6).

7. Système de tubes coaxiaux selon l'une quelconque des revendications 1 à 6, **caractérisé en ce que** les demi-coquilles des premiers anneaux (3, 4), de la pièce tubulaire (5) ainsi que du deuxième anneau (6) forment chacune une entité.
